# EUROPEAN PATENT APPLICATION

(11) **EP 3 961 536 A1**
(43) Date of publication of application: **02.03.2022**
(21) Application number: 21174085.7
(22) Date of filing: 17.05.2021
(51) Int. Cl.: G06Q 10/10, G06Q 50/18

(54) **SYSTEM, METHOD AND PLATFORM FOR FACILITATING MARRIAGES CEREMONY AND MARRIAGE LICENSE APPLICATION WITH THE COURTS**

(30) Priority: 31.08.2020 US 202017007947
(71) Applicant: Banks, Junikia Coleman, Smyrna, Georgia 30082 (US)
(72) Inventor: Banks, Junikia Coleman, Smyrna, Georgia 30082 (US)
(74) Representative: Loo, Chi Ching

(57) **Abstract**

A method that enables users to live broadcast, host or attend events, especially weddings. The present invention facilitates communication and transfer of legal documents and signatures through various exchanges necessary for a couple to acquire a legal marriage license by accepting an electronic signature. The present invention embeds a process called enseal (electronically notary seal) that allows documents to be notarized in real time. Further, while performing the ceremony, the present invention employs a method known as *komuteque,* wherein, all participants are brought together to a single IP address, thereby ensuring cyber jurisdiction. This process further enables Real-Time Communications (RTC) capabilities in the browser. Thus, the present invention allows and provides an optimal indirect human experience, wherein, video feeds from any location may be transmitted, the event may be streamed to any number of viewers, and live chatting may be performed during the ceremony and/or after at after events.

## Description

### FIELD OF THE INVENTION

The present invention relates generally to an event handling system. More specifically, the present invention is a method for live streaming an event in real time, thereby enabling a user to host events, particularly weddings, with a theoretically unlimited number of live-streaming guests. The present invention further enables users to send and receive official documents particularly marriage license/certificate conveniently to and from the relevant court officials, such as the offices of relevant county, state clerks, and government office. The invention offers as additional service free marriage education, electronic notary, name change, evites and online gift registry.

### BACKGROUND OF THE INVENTION

Each year in the United States, over two million people get married, generally following a similar procedure. The bride and groom take care of initial paperwork, invitations are sent, everyone gathers for the wedding, and marriage license documents are finalized. This system is rooted in traditional cultural values and ensures that the relevant marriage documents are signed and delivered appropriately. This type of a wedding, however, is restrictive, and certainly does not take advantage of the technological capabilities of today. It is often difficult for invited parties to be physically present at an event. The hassle of traveling can be prohibitive even for close family members, as it represents a significant hassle in terms of time and cost. Such inconvenience is particularly disruptive for elderly family members. These complications further increase the difficulty of hosting a destination wedding. Further, the couple getting married may not be able to invite all of the guests they want to invite due to cost limitations. This may lead to strain in relationships, as friends may be insulted if they are not invited to attend the wedding event. Traditional weddings add a layer of difficulty, by requiring the married couple to physically mail or otherwise deliver their wedding documents back and forth between the county and/or state clerk's office. What is needed is a method for enabling a couple trying to obtain a marriage license and host a wedding to engage all people they would like to invite, and to facilitate the marriage license approval process by making use of electronic signing technology. What is further needed is a method that enables any number of potential guests to access the wedding, or other large events, remotely.

The present invention addresses these issues. It is an objective of the present invention, to provide users with a method for facilitating legal online marriages utilizing a mobile application and/or website to enhance the convenience of hosting and attending an event, particularly a wedding. In the case of weddings, the process involves electronically signing, sending, and receiving of documentation to and from the county and/or state clerk's office, facilitating convenient submission and efficient transfer of paperwork. Additionally, the method for live streaming an event enables the couple, along with the marriage official and two witnesses, to appear on the devices of virtual guests live as the event takes place from anywhere in the world. This removes the inconvenience of traveling to a wedding, or other event, while simultaneously enabling guests to take part in the festivities remotely. According to the preferred embodiment, the present invention enables a couple to legally get married online, apply for marriage license/certificate through the courts, and obtain court issued license/certificate from the court. Further, the present invention also embeds a process called enseal (electronically notary seal) that allows documents to be notarized in real time. Furthermore, while performing the ceremony, the present invention employs a method known as *komuteque,* wherein, all the participants are brought together to a single IP address, thereby ensuring cyber jurisdiction. This process further amalgamates webrtc (an open framework or opensource technology for the web that enables real-time communications (RTC) capabilities in the browser). Thus, the present invention allows and provides an optimal indirect human experience, wherein, video feeds from any location may be transmitted, the event may be streamed to any number of viewers, and live chatting may be performed during the ceremony and/or after at after events. Additionally, the present invention may be used for conducting special events and streaming special moments to family and friends, such as birthdays, engagements, vow renewals, graduation events etc.

### BRIEF DESCRIPTION OF THE DRAWINGS

FIG. **1** is a block diagram illustrating the system overview of the present invention.
FIG. **2** is a flowchart describing the overall process followed by the method of the present invention.
FIG. **3** is a flowchart describing the host registration steps of the present invention.
FIG. **4** is a flowchart describing legal validation steps necessary for the event initiation process.
FIG. **5** is a flowchart describing the event invitation steps of the present invention.
FIG. **6** is a flowchart describing the guest registration steps of the present invention.
FIG. **7** is a flowchart describing the steps in the event, according to the present invention.
FIG. **8** is a flowchart describing the completion steps of the present invention.

### DETAIL DESCRIPTIONS OF THE INVENTION

All illustrations of the drawings are for the purpose of describing selected versions of the present invention and are not intended to limit the scope of the present invention.

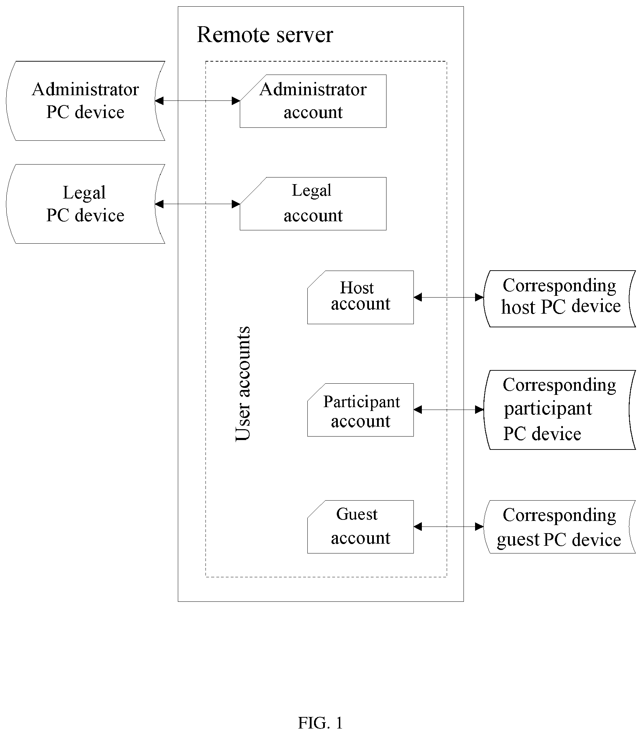

In reference to FIG. **1** through FIG.**8**, the present invention is a method for facilitating legal online marriages utilizing a mobile application and/or website to enhance the convenience of hosting and attending an event, particularly a wedding. In the case of weddings, the process involves electronically signing, sending, and receiving of documentation to and from the county and/or state clerk's office, thereby facilitating convenient submission and efficient transfer of paperwork. Further, the method for live streaming an event enables the couple, along with the marriage official and two witnesses, to appear on the devices of virtual guests live, as the event takes place from anywhere in the world. This removes the inconvenience of traveling to a wedding, or other event, while simultaneously enabling guests to take part in the festivities remotely. According to the preferred embodiment, the present invention enables a couple to legally get married online, apply for marriage license/certificate through the courts and obtain court issued license/certificate from the court. Further, the present invention also embeds a process called enseal (electronically notary seal) that allows documents to be notarized in real time. Furthermore, while performing the ceremony, the present invention employs a method known as *komuteque,* wherein, all the participants are brought together to a single IP address, thereby ensuring cyber jurisdiction. This process further amalgamates WEBRTC (an open framework or opensource technology for the web that enables Real-Time Communications (RTC) capabilities in the browser). Thus, the present invention allows and provides an optimal indirect human experience, wherein, video feeds from any location may be transmitted, the event may be streamed to any number of viewers, and live chatting may be performed during the ceremony and/or after at after events. Additionally, the present invention may be used for conducting special events and streaming special moments to family and friends, such as birthdays, engagements, vow renewals, graduation events etc.

The following description is in reference to FIG. 1 through FIG. 8. It is an aim of the present method to provide a cross-platform mobile application for the wedding industry, by providing an optical indirect human experience. Further, the present method intents to merge the three most powerful elements of the world; Love, Law, and Technology, to afford individuals from all walks of life and corners of the world, the opportunity to wed on an affordable global platform. As seen in FIG. 1, the system used to execute the present invention allows the present invention to function as an application that enables users to live broadcast, to host or attend events, especially weddings. The system further facilitates communication and transfer of legal documents and signatures through the various exchanges necessary for a couple to acquire a marriage license by accepting an electronic signature. In order to accomplish this, the method of the present invention associates a plurality of user accounts managed by at least one remote server, wherein each of the plurality of user accounts is associated with at least one profile identifier (ID) token, and wherein each of the plurality of user accounts is associated to a corresponding user personal computing (PC) device (Step **A**). The at least one profile ID token may be for example, an IP address. The plurality of user accounts may include, but are not limited to at least one administrator account, a legal account, a host account, at least one participant account, and at least one guest account. The corresponding user PC devices used to interact with the present invention may be, but are not limited to, a smartphone, a laptop, a desktop, or a tablet PC. The remote server is used to facilitate communication between the plurality of user accounts. Moreover, the remote server is used to execute a number of internal processes for the present invention and is used to store message data. In other words, the application of the present invention may comprise any of a variety of programs that enable electronic receipt and transmission of documents between the plurality of user accounts, through their mobile, desktop, or other internet-accessible computers, and enables live streaming and receipt of live video content using their integrated (preferably) device camera. Further, during livestreaming of the event, the plurality of user accounts is brought together to a single IP address, for efficient real time communication and for ensuring cyber jurisdiction.

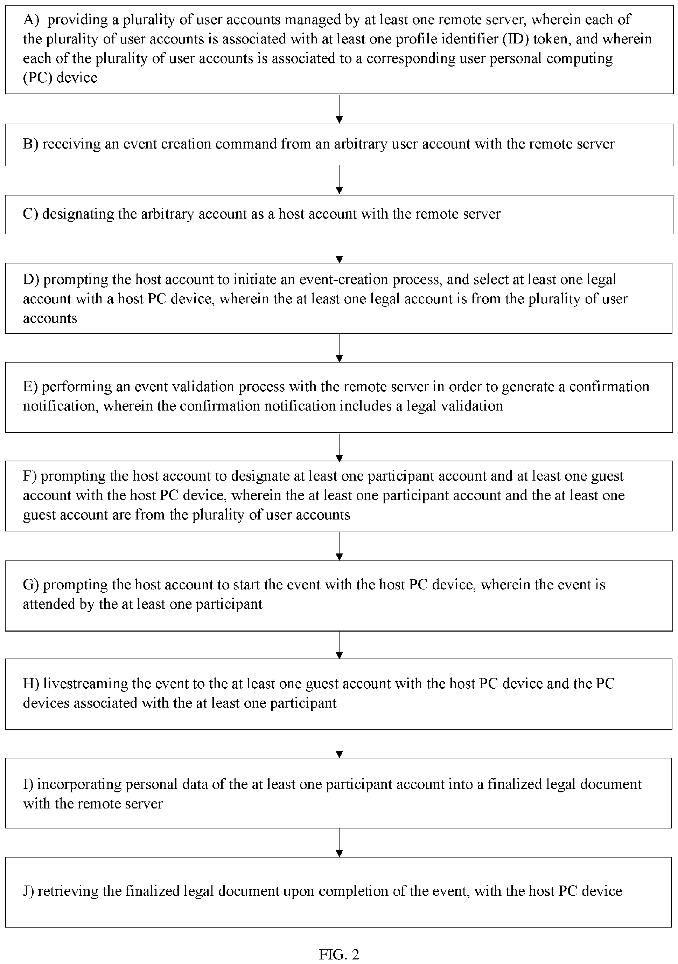

In the preferred method, the system used to execute the method of the present invention functions to perform four major steps as part of the method. The four steps comprise namely, registration, invitation, event and completion. The registration step is a step that enables users to access information and features of the application. As can be seen in FIG. **2**, the overall method of the present invention accomplishes the above described functionalities by first receiving an event creation command from an arbitrary user account with the remote server (Step **B**). For example, a user X may download the app from the iOS or Google Play App Store depending on the user's device. The app requests access to different parts of the user's device, most importantly the Camera and Microphone. These accesses are required for the app to function properly. However, if the user X accidently denies these permissions, he/she can modify that in the device's settings. At this point, the system designates the arbitrary account as a host account with the remote server (Step **C**).

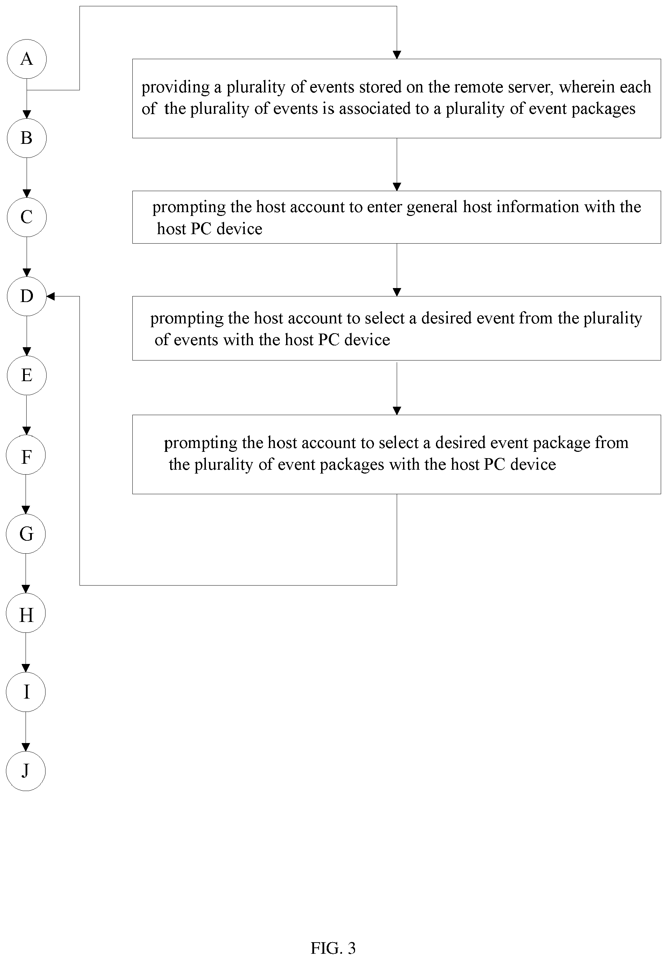

As can be seen in FIG. **3**, a sub-process of the method of the present invention enables a user to register themselves as a host of an event. To that end, the sub-process begins by providing a plurality of events stored on the remote server, wherein each of the plurality of events is associated to a plurality of event packages. Examples of the plurality of events may comprise, but are not limited to weddings, birthdays, engagements, vow renewals, graduation ceremonies etc. The subprocess continues by prompting the host account to enter general host information with the host PC device. Preferably, the general host information is at least one datapoint selected from a group consisting of full name, age, email address, phone number, and postal address. In other words, the app requires the user's full legal name, phone number, date of birth, and address for the account, as part of registering as the host account, and the general host information may be entered by simply following the steps shown on the screen of the application. Subsequently, the subprocess prompts the host account to select a desired event from the plurality of events and a desired event package from the plurality of event packages with the host PC device. The event package may be at least one option selected from a group consisting of time, price, and add-on features. Further, the add-on features may be at least one datapoint selected from a group, but not limited to, the group consisting of marriage education, last name change, prenup, wills, apostille license for international and domestic couples.

Continuing with the example of user X, once user X has the app downloaded on their phone, the app prompts the user X to enter the desired email address and password for the account. If the user X has not previously created an account, the user X will be taken to a registration process. Once user X logs into their account, user X will be presented with an events dashboard, this will contain all events the user has been invited to participate, view, or have created. For creating any type of event, including birthdays, weddings, or even the present inventor's signature e-ceremony, user X may tap on an associated button, such as a "Create an Event" button located on the dashboard. such that the user X may be presented with a page where they can upload a featured image for their event, scheduled date and time, name, select their package, and other premium adding for the event.

As can be seen in FIG. **2**, the overall method of the present invention continues by prompting the host account to initiate an event-creation process, and select at least one legal account with a host PC device, wherein the at least one legal account is from the plurality of user accounts (Step **D**). Preferably, the legal account corresponds to a court-house that the host selected, or was assigned to, by an administrator. The administrator is connected toa corresponding administrator PC device and associated with the administrator account, which is part of the plurality of user accounts. However, the legal account may comprise any other legal office that may provide legal validation to the ceremony being performed. The overall method continues by performing an event validation process with the remote server in order to generate a confirmation notification, wherein the confirmation notification includes a legal validation (Step **E**). According to the preferred method, all marriages are performed by certified ordained court wedding officiants that cover all U.S states worldwide. Further, the method offers a 100% fully legal marriages. In order to accomplish that, both partners involved in the marriage must meet all court requirements. Furthermore, marriages performed through the preferred method will be recognized in all 50 U.S States. For international couples and non-US citizens, an apostille hard copy marriage license may be requested from their wedding court officiant if applicable. Accordingly, the host account or the user accounts of parties involved in the ceremony must provide and get approval on certain legal documents, before they can officiate the marriage or any ceremony that requires legal validation. The present invention allows for electronically filing a marriage license with the courts and the person can virtually get the license or through proxy through the courts.

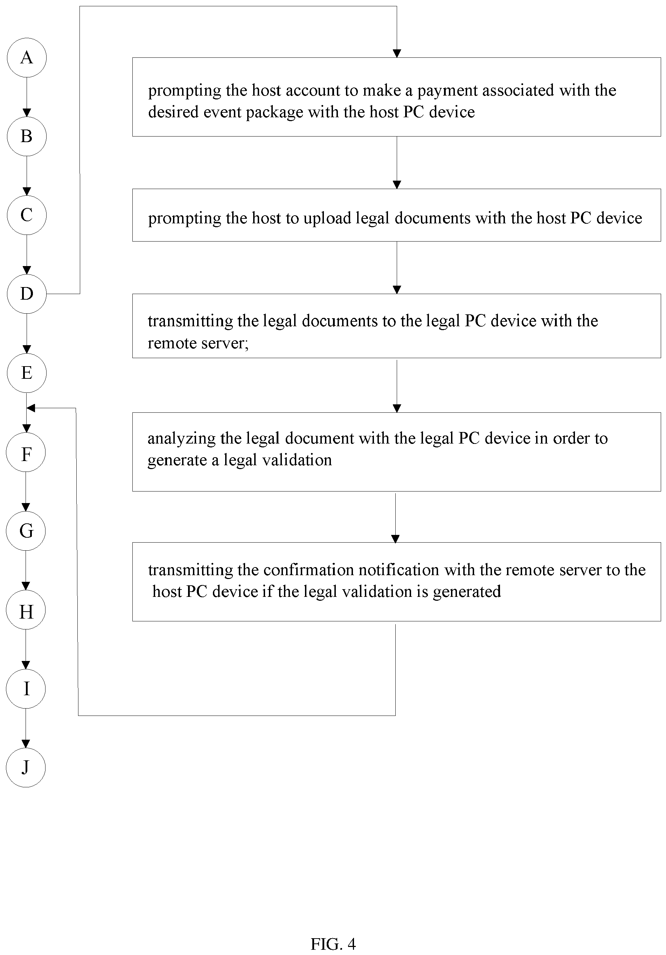

As seen in FIG. **4**, a sub-process of the present invention describes the legal validation steps necessary as part of the event initiation process. To that end, the sub-process begins by prompting the host account to make a payment associated with the desired event package with the host PC device. According to the preferred method, the app offers marriage education, last name change, prenup, wills, apostille license for international and domestic couples etc. Accordingly, the package pricing would vary depending on the selections made by the host account. Continuing with the previous example of user X, once user X completes the form and selects the options they'd like for their event, user X taps an appropriate button, such as a 'continue button' to see an order summary and purchase the event. If user X is looking to get married, then the user X will have to select the "Ceremony & License" package, as well as the Marriage Application package. Further, if user X needs their license within 72 hours, they will need to purchase the "Rush Shipping" option. The subprocess continues by prompting the host to upload legal documents with the host PC device. The legal documents preferably include, but are not limited to, proof of ID, birth certification documents, housing information, etc. The subprocess continues by transmitting the legal documents to the legal PC device with the remote server and analyzing the legal document with the legal PC device in order to generate a legal validation. In other words, upon completion of filling out the legal documents and uploading them to the application, the documents are sent electronically to the county or state clerk's office. The clerk analyzes the documents, signs the documentation and it is subsequently returned to the application for convenient viewing by the host. According to the method of the present invention, marriage applications may be electronically signed, and users can receive marriage license certificates electronically with a same day service. Further, the subprocess continues by transmitting the confirmation notification with the remote server to the host PC device if the legal validation is generated. The confirmation notification is sent to the host account by the administrator account via the remote server, such that the confirmation notification acts as a green signal for the host to proceed with the event and start the invitation process.

According to the preferred method, the invitation step is the step of the present invention in which the host prepares for the event. As seen in FIG. **2**, the overall method of the present invention continues by prompting the host account to designate at least one participant account and at least one guest account with the host PC device, wherein the at least one participant account and the at least one guest account are from the plurality of user accounts (Step **F**).

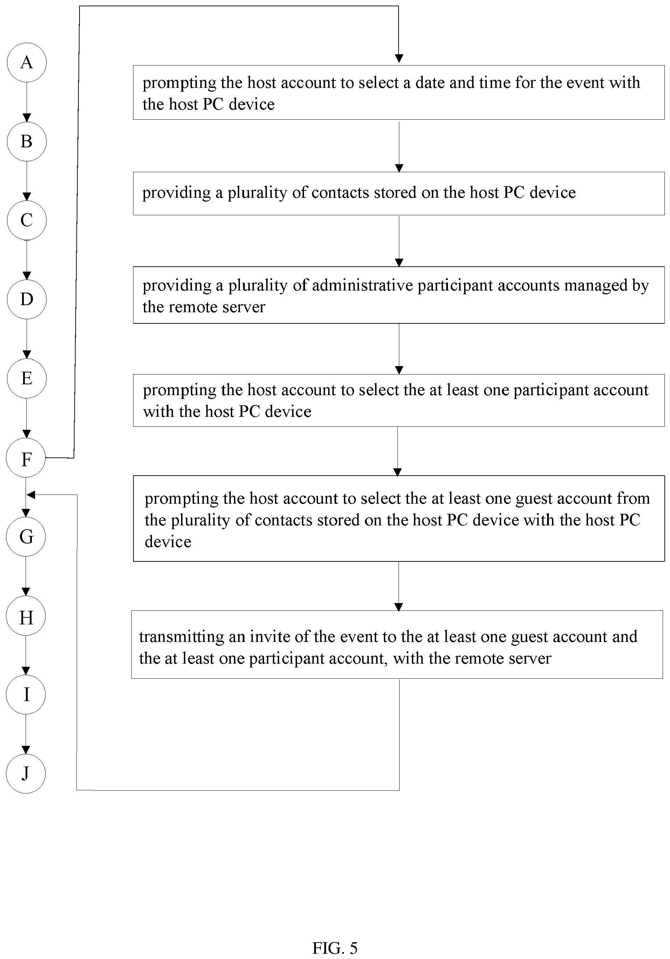

As seen in FIG. **5**, a sub-process of the present invention describes the event invitation steps of the present invention. To that end, the sub-process begins by prompting the host account to select a date and time for the event with the host PC device. The date may not necessarily be scheduled as far in the future as previously required by traditional wedding ceremonies, as it is easier for guests to attend in a live video feed. The subprocess continues by providing a plurality of contacts stored on the host PC device, wherein each of the plurality of contacts is associated to a corresponding user account from the plurality of user accounts. In other words, the app accesses the host's contacts from the host PC device (mobile phone). The subprocess continues by providing a plurality of administrative participant accounts managed by the remote server, wherein each of the plurality of administrative participant accounts is associated to a corresponding user account from the plurality of user accounts. For example, the app provides ordained officiants that are certified in all 50 U.S. states and some international countries, and the app may also provide witnesses required for a wedding ceremony for a fee. Accordingly, the host may select the app provided officiant, and/or witnesses for their event, who constitute the administrative participant accounts. The subprocess further continues by prompting the host account to select the at least one participant account with the host PC device, wherein the participant account is at least one account selected from a group consisting of the plurality of contacts stored of the host PC device. Further, the subprocess continues by prompting the host account to select the at least one guest account from the plurality of contacts stored on the host PC device with the host PC device. In other words, once the application has the host's contacts, which is preferably automatically generated by the application, the host selects guests from the contact list. Furthermore, the subprocess continues by transmitting an invite of the event to the at least one guest account and the at least one participant account, with the remote server. The application sends invites to selected guests, viewable by the guests upon account creation. The invites may include, but are not limited to video evites, cards, photographs, voice messages, written personal messages etc. The application further sends notifications to the guests as the event approaches. Additionally, the time and date of the event in the invite will reflect the time zone of the place corresponding to each of the at least one guest PC devices and each of the plurality of participant PC devices.

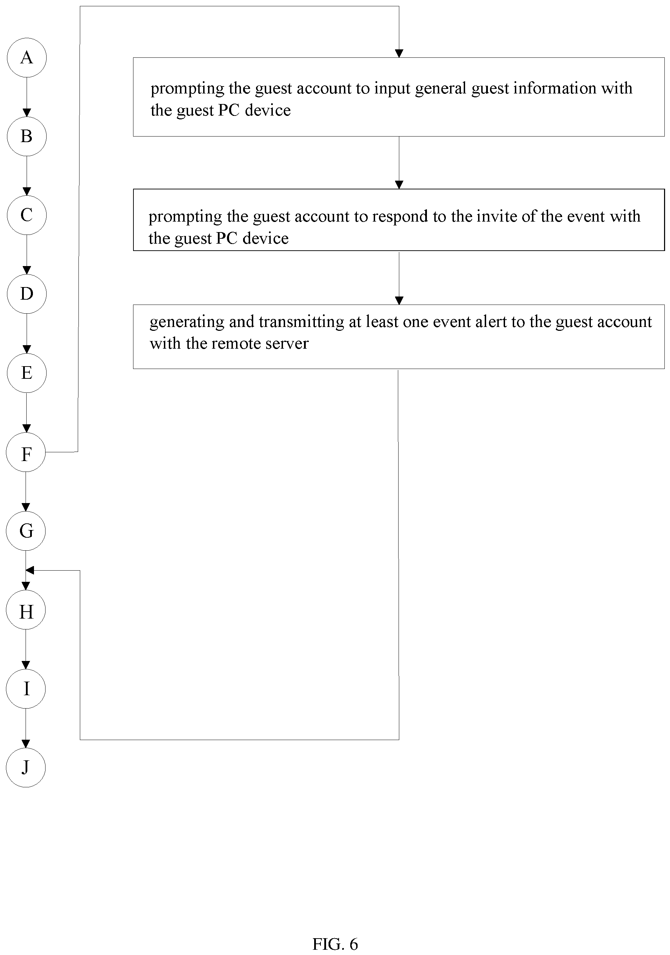

As can be seen in FIG. **6**, a sub-process of the present invention describes the guest registration steps of the present invention. To that end, the subprocess starts by prompting the guest account to input general guest information with the guest PC device. The guests undergo an abbreviated process. The general guest information preferably includes, but is not limited to, the guest's full name, age, email address, phone number, etc. The subprocess continues by prompting the guest account to respond to the invite of the event with the guest PC device.

Continuing with the example, once user X logs into their account, they will be presented with an events dashboard, which will contain all events the user has been invited to participate, view, or have created. They may appear as cards with the events photo, name, and other vital information about the event including scheduled date, time, and other people participating in this event. If user X has an event visible on their dashboard that they have been invited to, the user X may swipe and drag the card to the left to reveal response actions such as "Accept Invite" or "Decline Invite". This is not required but allows the host to know that guest account, (user X) has seen and responded to the invitation. This can be helpful when communicating at different schedules prior to the event. Further, the subprocess continues by generating and transmitting at least one event alert to the guest account with the remote server. This prepares the plurality of user accounts for live streaming the event and enables the application to send updates and alerts to the plurality of user accounts as the event approaches.

As seen in FIG. **2**, the overall method of the present invention continues by prompting the host account to start the event with the host PC device, wherein the event is attended by the at least one participant (Step **G**). The event step first involves guests logging into the application at the beginning of the event. In the preferred method of the present invention, i.e. for weddings, the couple, a marriage official, and two witnesses gather to perform the ceremony. In an alternative embodiment, the five participants do not gather together, but may coordinate being online on the application at the same time. It is an aim of the present invention to provide a unique way of sharing special moments with family and friends. In order to accomplish that, the overall process continues by livestreaming the event to each of the at least one guest account with the host PC device and the PC devices associated with the at least one participant (Step **H**). Further, the overall method of the present invention continues by incorporating personal data of the at least one participant account into a finalized legal document with the remote server (Step **I**).

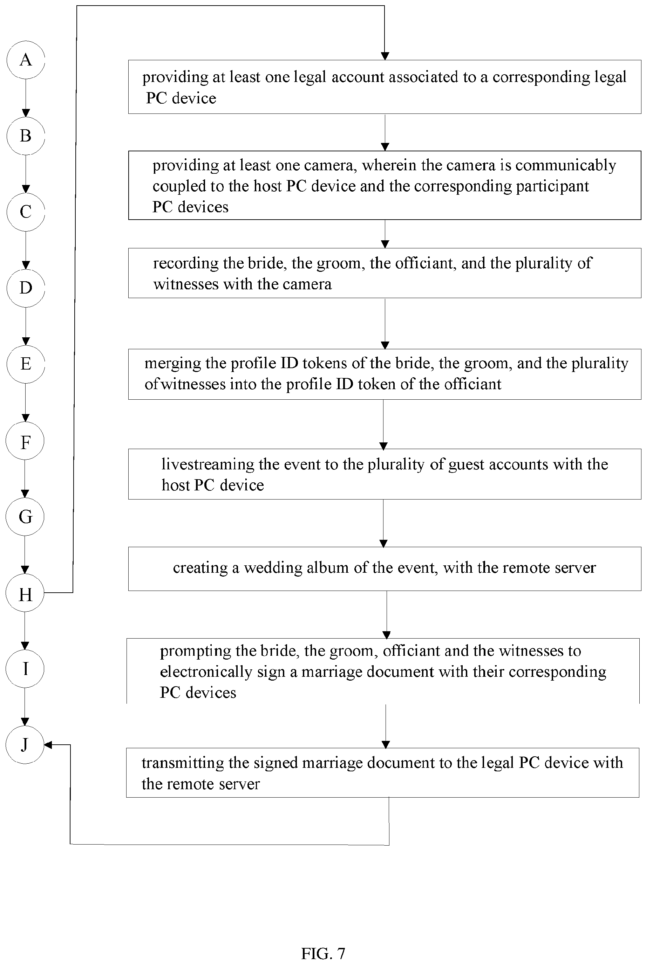

As can be seen in FIG. 7, a sub-process of the present invention describes the various steps involved in Step **H** and Step **I**. To that end, the subprocess is described with reference to the event being a wedding ceremony and wherein the at least one participant includes a bride, a groom, an officiant, and a plurality of witnesses. The subprocess continues by providing at least one camera, wherein the camera is communicably coupled to the host PC device and the corresponding participant PC devices. Preferably, the host focuses cameras, either external or those integrated into the mobile devices of the participants, onto these five individuals. If the user is using an administrative participant (for example a certified Court Officiant), the administrative participant will direct the user on how to proceed at this point. Further, the administrative participant may be contacted prior to the event with any questions or concerns, such that the officiant will reach out prior to the event to make sure everyone is on the same page to avoid any confusion. The subprocess continues by recording the bride, the groom, the officiant, and the plurality of witnesses with the camera, and livestreaming the event to each of the at least on guest accounts with the host PC device. In other words, the ceremony or the event takes place, and guests, along with other interested viewers, view the live stream as recorded by the cameras. Further, the method of the present invention merges the profile ID token of the bride, the groom, and the plurality of witnesses into the profile ID token of the officiant, to create cyber jurisdiction. In other words, the method merges four IP addresses and brings the participants to one IP address to be in the same environment to correct cyber jurisdiction. For example, if the officiant is in Utah with an IP address (profile ID token) of 12345, the bride is in Spain with an IP address 678gi, and the groom is in Jamaica with an IP address of 87697, the method would merge profile ID tokens of the bride and the groom and bring them to the Utah IP address, thereby creating cyber jurisdiction. Preferably, the IP address to which the participants would be merged to, would correspond to the IP address of the state where the officiant is, and/or where the license is issued. Thus, the merged IP address will be 12345gi97 (taking the last 2 digits of the other IP adding to Utah). Furthermore, the method creates a wedding album of the event, with the remote server, such that guests and/or other user account holders may view the wedding film after the wedding takes place within the application at their convenience.

Continuing with the example of user X, the user X will need to have all their invited participants login to the app and tap associated button/card to enter the event. The user X may need to tap an actuation button to start the event as well. The user X will see a prompt before entering the event, and once the user selects yes, the user will be taken into their event. The user's participants will begin appearing as they connect to the event through the app. The subprocess continues by prompting the bride, the groom, officiant and the witnesses to electronically sign a marriage document with their corresponding PC devices. In other words, upon completion of the event/ceremony, the married couple and the wedding official electronically sign the marriage license and other documents on the application. Further, the subprocess continues by transmitting the signed marriage document to the legal PC device with the remote server. According to the preferred method, electronically signing the marriage documents enables documents to be notarized in real time. The signed documents are further sent electronically back to the office of the county or state clerk. Once the event has concluded, the host may tap a button on the app to leave the event. This also works for the participants and guests as well. Further, the host has the option to flip their devices camera or mute the device.

As seen in FIG. **2**, the overall method of the present process continues by retrieving the finalized legal document upon completion of the event, with the host PC device (Step **J**). Preferably, once the event is completed and the marriage is finalized, the couple will receive a digital certified copy and completion of marriage license certificate on the same day, 30 minutes after ceremony. According to the present method, a hard copy of the court sealed marriage license certificate may be retrieved through multiple options. Examples of the such retrieval options include, but are not limited to 24-48 hours rush service, standard 3-5 business days, in-person delivery, or delivered by express mail via FED EX, DHL, UPS or US postal with tracking information.

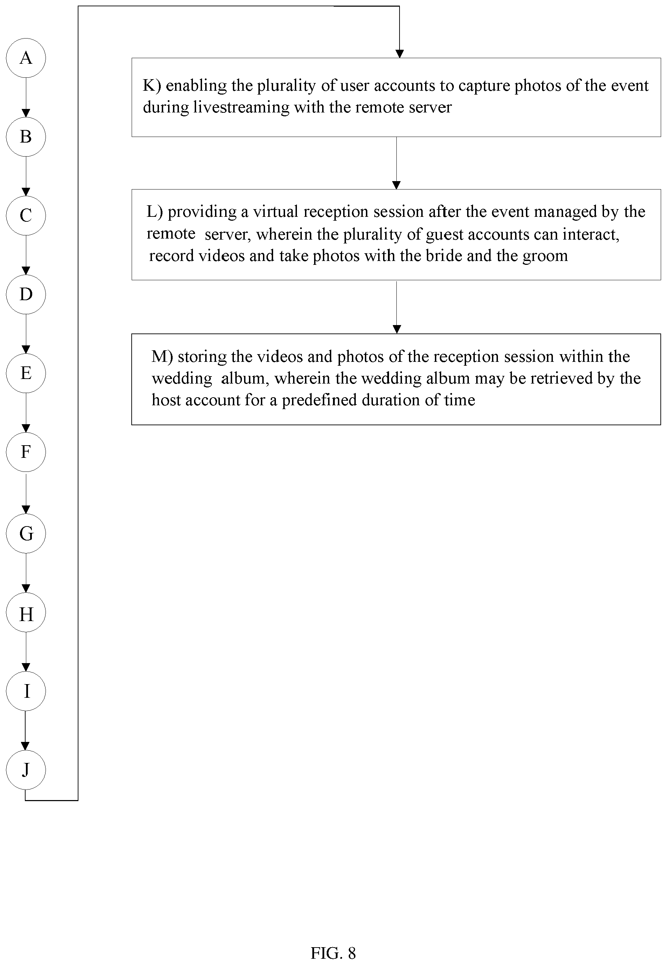

As can be seen in FIG. **8**, a sub-process of the present invention describes the various event completion steps of the present invention. To that end, the subprocess starts by enabling the plurality of user accounts to capture photos of the event during livestreaming with the remote server. For example, as a guest or a participant is watching the event in real time, the method or the present invention provides access by way of a button or any other finger tap feature, wherein guests can take pictures of the bride and groom. Further, each of the guest accounts may leave messages, short videos, voice messages, well wishes etc. for the bride and groom to watch later. According to the preferred method, the plurality of user accounts can interact with no fear of hacking or any online data leaks, because the IP addresses of all the user accounts will be merged and associated with the mail id of the evite, thereby providing additional security and cyber jurisdiction during the entire event. The subprocess continues by providing a virtual reception session after the event, managed by the remote server, wherein each of the at least one guest accounts can interact, record videos and take photos with the bride and the groom. This is similar to a reception hour or a cocktail hour in a traditional wedding, wherein the bride and groom as well as the guests and the other participants are provided an opportunity to connect and exchange wishes like in a physical gathering.

Continuing with the example of user X, if user X has been invited to an event, at any point during the event, the user X can simply tap on a button/card of the event shown on the dashboard of the app, for the user to be taken to the chat room (virtual reception session) or streaming room respectively. Alternately, if the user X has created an event and wants to invite participants, guests, or manage the event, the user X will proceed by tapping the card as well, such that user X will be taken to event details page.

As seen in FIG. **8**, the subprocess continues by storing the videos and photos of the reception session within the wedding album, wherein the wedding album may be retrieved by the host account for a predefined duration of time. In other words, after a fixed duration of time (for example, 30 minutes), the wedding album or an event's archive will become ready and the user can re-watch or download a copy of the event at any point for 30 days. Further, the present method provides the option to have a gift registry for the host account.

The present invention is intended to provide a fast, easy and affordable wedding method for all couples including traditional, international non- US citizens, celebrities, re-marriages, same-sex marriages, jail and military marriages. In order to assist in the smooth functioning of the present method, the present method provides an administrator account, wherein the administrator account is from the plurality of user accounts, and wherein the administrator account is communicably coupled to the host account for ensuring assistance for the event to the host. Thus, the present invention is dedicated to ushering couples of all socio-economic backgrounds into the new marital digital world, on their time schedule, through a virtual stage.

Although the invention has been explained in relation to its preferred embodiment, it is to be understood that many other possible modifications and variations can be made without departing from the spirit and scope of the invention as hereinafter claimed.

## Claims

1. A method for facilitating and legalizing ceremonies through the internet, the method comprising:
(A) providing a plurality of user accounts managed by at least one remote server, wherein each of the plurality of user accounts is associated with at least one profile identifier (ID) token, and wherein each of the plurality of user accounts is associated to a corresponding user personal computing (PC) device;
(B) receiving an event creation command from an arbitrary user account with the remote server;
(C) designating the arbitrary account as a host account with the remote server;
(D) prompting the host account to initiate an event-creation process, and select at least one legal account with a host PC device, wherein the at least one legal account is from the plurality of user accounts;
(E) performing an event validation process with the remote server in order to generate a confirmation notification, wherein the confirmation notification includes a legal validation;
(F) prompting the host account to designate at least one participant account and at least one guest account with the host PC device, wherein the at least one participant account and the at least one guest account are from the plurality of user accounts;
(G) prompting the host account to start the event with the host PC device, wherein the event is attended by the at least one participant;
(H) livestreaming the event to the at least one guest account with the host PC device and the PC devices associated with the at least one participant;
(I) incorporating personal data of the at least one participant account into a finalized legal document with the remote server; and
(J) retrieving the finalized legal document upon completion of the event, with the host PC device.

2. The method of claim 1, wherein during livestreaming of the event, the plurality of user accounts is brought together to a single IP address, for efficient real time communication and ensuring cyber jurisdiction.

3. The method of claim 1, the method comprising steps of:
providing a plurality of events stored on the remote server, wherein each of the plurality of events is associated to a plurality of event packages;
prompting the host account to enter general host information with the host PC device;
prompting the host account to select a desired event from the plurality of events with the host PC device;
prompting the host account to select a desired event package from the plurality of event packages with the host PC device.

4. The method of claim 3, wherein the general host information is at least one datapoint selected from a group consisting of full name, age, email address, phone number, and postal address.

5. The method of claim 3, wherein the event package is at least one option selected from a group consisting of time, price, and add-on features.

6. The method of claim 5, wherein the add-on features is at least one option selected from a group consisting of marriage education, last name change, prenup, wills, apostille license for international and domestic couples.

7. The method of claim 3, the method comprising steps of:
prompting the host account to make a payment associated with the desired event package with the host PC device;
prompting the host to upload legal documents with the host PC device;
transmitting the legal documents to the legal PC device with the remote server;
analyzing the legal document with the legal PC device in order to generate a legal validation; and
transmitting the confirmation notification with the remote server to the host PC device if the legal validation is generated.

8. The method of claim 1, the method comprising steps of:
prompting the host account to select a date and time for the event with the host PC device;
providing a plurality of contacts stored on the host PC device, wherein each of the plurality of contacts is associated to a corresponding user account from the plurality of user accounts;
providing a plurality of administrative participant accounts managed by the remote server, wherein each of the plurality of administrative participant accounts is associated to a corresponding user account from the plurality of user accounts;
prompting the host account to select the at least one participant account with the host PC device, wherein the participant account is at least one account selected from a group consisting of the plurality of contacts stored of the host PC device;
prompting the host account to select the at least one guest account from the plurality of contacts stored on the host PC device with the host PC device; and
transmitting an invite of the event to the at least one guest account and the at least one participant account, with the remote server.

9. The method of claim 8, wherein the time and date of the event in the invite will reflect the time zone of the place corresponding to each of the guest PC device and each of the participant PC device.

10. The method of claim 8, the method comprising steps of:
prompting the guest account to input general guest information with the guest PC device;
prompting the guest account to respond to the invite of the event with the guest PC device; and
generating and transmitting at least one event alert to the guest account with the remote server.

11. The method of claim 1, the method comprising steps of:
wherein the event is a wedding ceremony and wherein the at least one participant includes a bride, a groom, an officiant, and a plurality of witnesses;
providing at least one camera, wherein the camera is communicably coupled to the host PC device and the corresponding participant PC devices;
recording the bride, the groom, the officiant, and the plurality of witnesses with the camera;
merging the profile ID token of the bride, the groom, and the plurality of witnesses into the profile ID token of the officiant;
livestreaming the event to the each of the at least one guest accounts with the host PC device;
creating a wedding album of the event, with the remote server;
prompting the bride, the groom, officiant and the witnesses to electronically sign a marriage document with their corresponding PC devices; and
transmitting the signed marriage document to the legal PC device with the remote server.

12. The method of claim 11, wherein electronically signing the marriage documents enables documents to be notarized in real time.

13. The method of claim 11, the method comprising the steps of:
enabling the plurality of user accounts to capture photos of the event during livestreaming with the remote server;
providing a virtual reception session after the event managed by the remote server, wherein each of the at least one guest accounts can interact, record videos and take photos with the bride and the groom; and
storing the videos and photos of the reception session within the wedding album, wherein the wedding album may be retrieved by the host account for a predefined duration of time.

14. The method of claim 1, comprising:
providing an administrator account, wherein the administrator account is from the plurality of user accounts, and wherein the administrator account is communicably coupled to the host account for ensuring assistance for the event to the host.
